(19) Europäisches Patentamt
European Patent Office
Office européen des brevets

(11) EP 4 725 910 A1

(12) **EUROPEAN PATENT APPLICATION**

(43) Date of publication:
**15.04.2026 Bulletin 2026/16**

(21) Application number: 25203762.7

(22) Date of filing: **22.09.2025**

(51) International Patent Classification (IPC):
*C01G 53/04* (2025.01)    *C01G 53/40* (2025.01)
*C01G 53/42* (2025.01)    *H01M 4/525* (2010.01)

(52) Cooperative Patent Classification (CPC):
**H01M 4/525; C01G 53/04; C01G 53/40;
C01G 53/42; C01G 53/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024 KR 20240133227**

(71) Applicants:
• **SAMSUNG SDI CO., LTD.**
  **Yongin-si, Gyeonggi-do 17084 (KR)**

• **Seoul National University R&DB Foundation**
  **Seoul 08826 (KR)**

(72) Inventors:
• **KIM, Jinhwa**
  **17084 Yongin-si (KR)**
• **LEE, Kyu Tae**
  **08826 Seoul (KR)**
• **CHOI, Seung Hyun**
  **08826 Seoul (KR)**

(74) Representative: **Marks & Clerk LLP**
  **15 Fetter Lane**
  **London EC4A 1BW (GB)**

(54) **POSITIVE ELECTRODE ACTIVE MATERIAL PRECURSOR, PREPARATION METHOD THEREOF, AND PREPARATION METHOD OF POSITIVE ELECTRODE ACTIVE MATERIAL INCLUDING THE SAME**

(57)    A method for preparing a single-particle type positive electrode active material precursor includes (a) mixing a nickel-based hydroxide and an inactive lithium salt to prepare a mixture; and (b) performing a first heat treatment on the mixture to obtain a nickel-based oxide in a form of single particles. According to some example embodiments, a positive electrode active material precursor and a method for preparing the same, and a method for preparing a positive electrode active material including the same minimize or reduce the production process, thereby ensuring long cycle-life characteristics and improving high-temperature storage characteristics. A rechargeable lithium battery using the positive electrode active material can exhibit high initial charging and discharging capacity and efficiency, and can implement long cycle-life characteristics.

FIG. 7

EP 4 725 910 A1

**Description**

**BACKGROUND**

**1. Field**

A positive electrode active material precursor, a preparation method thereof, and a preparation method of a positive electrode active material including the same are disclosed.

**2. Description of the Related Art**

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery having high energy density as a driving power source and/or power storage power source for hybrid and/or electric vehicles.

Various positive electrode active materials have been investigated to realize rechargeable lithium batteries for applications to the aforementioned uses. In the recent rapidly increasing interest in large-sized, high-capacity, and/or high-energy-density rechargeable lithium batteries, there is a need to develop positive electrode active materials and positive electrode active material precursors that can increase capacity while ensuring stability and enable operation at high voltages.

**SUMMARY**

Provided are a positive electrode active material precursor capable of implementing high density, high capacity, long cycle-life characteristics and high energy density, a preparation method thereof, and a preparation method of a positive electrode active material including the same.

In some example embodiments, a method for preparing a single-particle type (or kind of) positive electrode active material precursor includes: (a) mixing a nickel-based hydroxide and an inactive lithium salt to prepare a mixture; and (b) performing a first heat treatment on the mixture to obtain a nickel-based oxide in a form of single particles.

In some example embodiments, a positive electrode active material precursor includes a nickel-based oxide in a form of single particles and has a span value of about 0.85 to about 1.48 according to Equation 1.

$$\text{Equation 1}$$

$$\text{Span} = (D90\text{-}D10)/D50$$

In Equation 1, D10 is a particle diameter of a particle has a cumulative volume of 10 volume% in the particle size distribution, D50 is a particle diameter of a particle having a cumulative volume of 50 volume% in the particle size distribution, and D90 is the particle diameter of a particle having a cumulative volume of 90 volume% in the particle size distribution.

In some example embodiments, a method for preparing a positive electrode active material includes: mixing a positive electrode active material precursor prepared by the preparation method with a lithium raw material and performing a second heat treatment.

In some example embodiments, a method for preparing a positive electrode active material includes mixing the positive electrode active material precursor and a lithium raw material and performing a second heat treatment.

At least some of the above and other features of the invention are set out in the claims.

According to some example embodiments, a positive electrode active material precursor and a method for preparing the same, and a method for preparing a positive electrode active material including the same minimize or reduce the production process, thereby ensuring long cycle-life characteristics and improving high-temperature storage characteristics. A rechargeable lithium battery using the above-mentioned positive electrode active material may exhibit high initial charge/discharge capacity and efficiency, and can implement long cycle-life characteristics.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

FIGS. 1 to 4 are schematic drawings showing rechargeable lithium batteries according to some example embodiments.

FIG. 5 is a graph showing the results of X-ray diffraction (XRD) analysis of a positive electrode active material precursor according to Examples.

FIG. 6 is a graph showing the results of X-ray diffraction (XRD) analysis of a positive electrode active material precursor according to Comparative Example 1.

FIG. 7 is a SEM image of the surface of a positive electrode active material precursor prepared according to Example 1.

FIG. 8 is a SEM image of the surface of a positive electrode active material precursor prepared according to Example 2.

FIG. 9 is a SEM image of the surface of a positive electrode active material precursor prepared according to Example 3.

FIG. 10 is a SEM image of the surface of a positive electrode active material precursor prepared according to Example 4.

FIG. 11 is a SEM image of the surface of a positive electrode active material precursor prepared according to Example 5.

FIG. 12 is a SEM image of the surface of a positive electrode active material precursor prepared according to Example 6.

FIG. 13 is a SEM image of the surface of a positive electrode active material precursor prepared according to Comparative Example 1.

FIG. 14 is a SEM image of the surface of a positive electrode active material prepared according to Example 1.

FIG. 15 is a SEM image of the surface of a positive electrode active material prepared according to Comparative Example 1.

FIG. 16 is a SEM image of the surface of a positive electrode active material prepared according to Comparative Example 2.

FIG. 17 is a graph showing the results of Raman spectroscopy (RAMAN) analysis of an inactive lithium salt recovered after preparing a positive electrode active material precursor according to Examples.

## DETAILED DESCRIPTION

Hereinafter, example embodiments will be described in more detail so that those of ordinary skill in the art can easily implement the subject matter of the present disclosure. However, the subject matter of this disclosure may be embodied in many different forms and should not be construed as being limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In embodiments, "layer" herein includes not only a shape formed on the whole surface if (e.g., when) viewed from a plan view, but also a shape formed on a partial surface.

The average particle diameter may be measured by any suitable method generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, if (e.g., when) a definition is not otherwise provided, the average particle diameter means a diameter ($D_{50}$) of particles having a cumulative volume of 50 volume% in the particle size distribution that is obtained by measuring the size (diameter or major axis length) of about 20 particles at random in a scanning electron microscope image. $D_{90}$ (particles having a cumulative volume of 90 volume% in the particle size distribution) and $D_{10}$ (particles having a cumulative volume of 10 volume% in the particle size distribution) may be measured using the same methods as $D_{50}$.

In embodiments, "or" is not to be construed as an exclusive meaning, for example, "A or B" is construed to include A, B, A+B, and/or the like.

"Metal" is interpreted as a concept including ordinary metals, transition metals and/or metalloids (semi-metals).

## Method for Preparing Positive Electrode Active Material Precursor

A method for preparing a positive electrode active material precursor according to some example embodiments includes: (a) mixing a nickel-based hydroxide and an inactive lithium salt to prepare a mixture; and (b) performing a first heat treatment on the mixture to obtain a nickel-based oxide in a form of single particles; wherein the positive electrode active material precursor prepared through this method is in a form of a single particle.

The nickel-based positive electrode active material generally has a secondary particle shape in which a plurality of primary particles are agglomerated together. However, due to changes in the volume of the particles that occur during continuous charging/discharging, cracks are formed within the secondary particles if (e.g., when) used for a long period of time (e.g., over a plurality of charging/discharging cycles). The formation of cracks in the secondary particles facilitates electrolyte penetration through the cracks and accelerates side reactions, resulting in abrupt performance deterioration. To overcome this, it is necessary or desirable to control the shape of the nickel-based positive electrode active material into single particles, and through this, battery performance can be improved.

Generally, the synthesis of single-particle type (or kind of) positive electrode active materials is carried out by mixing precursors and lithium raw materials, and is mainly carried out at high temperatures to increase particle size. However, there are problems in that the high temperature environment causes particle agglomeration, the synthesis of highly crystalline positive electrode active materials is limited, and additional pulverizing operations such as a ball mill are required or desirable to ensure the dispersibility of positive electrode active material particles, which requires complex processes.

Accordingly, a single-particle type (or kind of) positive electrode active material precursor that does not include a lithium raw material is first synthesized by utilizing a nickel-based hydroxide co-precipitation precursor, and then the precursor is mixed with a lithium raw material and subjected to a heat treatment process to prepare a single-particle type (or kind of) positive electrode active material.

A method for preparing a positive electrode active material precursor according to some example embodiments includes (a) mixing a nickel-based hydroxide and an inactive lithium salt to prepare a mixture. An inactive lithium salt having no reactivity (e.g., does not react with the nickel-based hydroxide) is mixed with a single-particle type (or kind of) positive electrode active material precursor, followed by a (first) heat treatment process and a water washing process to obtain a well-dispersed single-particle type (or kind of) positive electrode active material precursor. In some embodiments, the step of performing the first heat treatment process may be conducted directly after the step of mixing the nickel-based hydroxide and an inactive lithium salt to prepare a mixture. In some embodiments, the water washing process may be conducted directly after the step of performing the first heat treatment process. In some embodiments, the method for preparing a positive electrode active material precursor may consist of: (a) mixing a nickel-based hydroxide and an inactive lithium salt to prepare a mixture; (b) performing a first heat treatment on the mixture to obtain a nickel-based oxide in a form of single particles; and (c) subjecting the nickel-based oxide to a water washing process.

The nickel-based hydroxide may be represented by Chemical Formula 1.

$$\text{Chemical Formula 1} \qquad Ni_{x1}M1_{y1}M2_{z1}(OH)_2$$

In Chemical Formula 1, $0.3 \leq x1 \leq 1$, $0 \leq y1 \leq 0.7$, $0 \leq z1 \leq 0.7$, $0.9 \leq x1+y1+z1 \leq 1.1$, and M1 and M2 are each independently one or more elements selected from Al, B, Ba, Ca, Ce, Co, Cr, Cu, Fe, Mg, Mn, Mo, Nb, Si, Sn, Sr, Ti, V, W, Zn, Y, and Zr. In embodiments, M1 and M2 may be different elements. In some embodiments, M1 may be Co. In some embodiments, M2 may be Al or Mn. In some embodiments, M1 may be Co and M2 may be Al. In some embodiments, M1 may be Co and M2 may be Mn.

In Chemical Formula 1, x1, y1 and z1 may satisfy: $0.6 \leq x1 \leq 1$, $0 \leq y1 \leq 0.4$, and $0 \leq z1 \leq 0.4$; $0.8 \leq x1 \leq 1$, $0 \leq y1 \leq 0.2$, and $0 \leq z1 \leq 0.2$; or $0.9 \leq x1 < 1$, $0 < y1 \leq 0.1$, and $0 \leq z1 \leq 0.1$.

The inactive lithium salt may include (e.g., may be or may consist of) LiCl, $Li_2SO_4$, or a combination thereof and, for example, LiCl may be used. If (e.g., when) a nickel-based hydroxide and an inactive lithium salt are used in the preparation of a positive electrode active material precursor, instead of the inactive lithium salt reacting with the nickel-based hydroxide, nickel-based hydroxide particles are grown and induced into a single-particle form, thereby preparing a positive electrode active material precursor in the form of a single particle having excellent dispersibility, and through this, a positive electrode active material in the form of a single particle having high crystallinity even at low temperatures may be prepared.

A molar ratio of the nickel-based hydroxide and the inactive lithium salt may be about 0.1:1 to about 10:1, for example, about 0.2:1 to about 8:1, about 0.3:1 to about 6:1, about 0.4:1 to about 4:1, or about 0.5:1 to about 2:1. If (e.g., when) the molar ratio of nickel-based hydroxide and inactive lithium salt is within the above ranges, a single-particle type (or kind of) positive electrode active material precursor having excellent dispersibility can be prepared, thereby preparing a single-particle type (or kind of) positive electrode active material having high crystallinity even at low temperatures.

A method for preparing a positive electrode active material precursor according to some example embodiments includes (b) performing a first heat treatment on the mixture to obtain a nickel-based oxide in the form of single particles. By mixing the inactive lithium salt with a nickel-based hydroxide as a co-precipitation precursor and then performing a heat treatment process, a positive electrode active material precursor in the form of well-dispersed single particles of nickel-based oxide can be obtained. The above preparing method does not require or utilize excessive lithium raw materials or additional crushing processes, making the process simple and cost-saving.

The first heat treatment may be performed at a temperature of about 500 °C to about 1,000 °C, for example, about 550 °C to about 950 °C, or about 600 °C to about 900 °C. In embodiments, the first heat treatment may be performed for about 1 hour to about 24 hours, for example, for about 6 hours to about 18 hours, or for about 8 hours to about 12 hours. In some embodiments, the first heat treatment may be performed at a first temperature of about 500 °C to about 1,000 °C, for example, about 550 °C to about 950 °C, about 600 °C to about 900 °C, about 600 °C to about 800 °C, or about 600 °C to about 700 °C; and then at a second temperature that is higher than the first temperature of about 600 °C to about 1,000 °C, for example, about 650 °C to about 950 °C, about 700 °C to about 900 °C, about 750 °C to about 900 °C, or about 800 °C to about 900 °C. The first heat treatment at the first temperature may be conducted for about 1 hour to about 12 hours, for example, for about 6 hours to about 12 hours, or for about 8 hours to about 12 hours; and the first heat treatment at the second temperature may be conducted for about 1 hour to about 12 hours, for example, for about 1 hour to about 10 hours, for about 1 hour to about 5 hours, for about 1 hour to about 3 hours, or for about 1 hour to about 2 hours. The first heat treatment may be conducted in an oxygen atmosphere.

The nickel-based oxide may be represented by Chemical Formula 2.

$$\text{Chemical Formula 2} \qquad \text{Ni}_{x2}\text{M3}_{y2}\text{M4}_{z2}\text{O}_{2-b2}\text{X}_{b2}$$

In Chemical Formula 2, $0.3 \leq x2 \leq 1$, $0 \leq y2 \leq 0.7$, $0 \leq z2 \leq 0.7$, $0.9 \leq x2+y2+z2 \leq 1.1$, and $0 \leq b2 \leq 0.1$, M3 and M4 are each independently one or more element selected from Al, B, Ba, Ca, Ce, Co, Cr, Cu, Fe, Mg, Mn, Mo, Nb, Si, Sn, Sr, Ti, V, W, Zn, Y, and Zr, and X is one or more element selected from F, P, and S. In embodiments, M3 and M4 may be different elements. In some embodiments, M3 may be Co. In some embodiments, M4 may be Al or Mn. In some embodiments, M3 may be Co and M4 may be Al. In some embodiments, M3 may be Co and M4 may be Mn. In some embodiments, X may be absent (i.e., b2=0).

In Chemical Formula 2, x2, y2 and z2 may satisfy: $0.6 \leq x2 \leq 1$, $0 \leq y2 \leq 0.4$, and $0 \leq z2 \leq 0.4$; $0.8 \leq x2 \leq 1$, $0 \leq y2 \leq 0.2$, and $0 \leq z2 \leq 0.2$; or $0.9 \leq x2 < 1$, $0 < y2 \leq 0.1$, and $0 \leq z2 \leq 0.1$.

The nickel-based oxide may include substantially no lithium or a small amount of lithium, and the lithium content (e.g., amount) may be less than or equal to about 0.01 mol%, for example, 0 mol% to about 0.01 mol%, or about 0.001 mol% to about 0.01 mol% based on 100 mol% of the total nickel-based oxide.

After the act (b), recovering the inactive lithium salt mixed in the act (a) may be further included. In some embodiments, the step of recovering the inactive lithium salt may be conducted directly after the water washing process. In some embodiments, the method for preparing a positive electrode active material precursor may consist of: (a) mixing a nickel-based hydroxide and an inactive lithium salt to prepare a mixture; (b) performing a first heat treatment on the mixture to obtain a nickel-based oxide in a form of single particles; (c) subjecting the nickel-based oxide to a water washing process; and (d) recovering the inactive lithium salt. For example, the inactive lithium salt has an advantage of being able to be reused by going through the recovering of the inactive lithium salt because it only (or substantially only) affects the growth of the single particle form and induces nickel-based hydroxide into nickel-based oxide in the form of single particles and does not react with the nickel-based hydroxide.

**Positive Electrode Active Material Precursor**

According to some example embodiments, a positive electrode active material precursor includes a nickel-based oxide in the form of single particles and has a span value of about 0.85 to about 1.48 according to Equation 1.

$$\text{Equation 1}$$

$$\text{Span} = (D90-D10)/D50$$

In Equation 1, D10 is a particle diameter of a particle having a cumulative volume of 10 volume% in the particle size distribution, D50 is a particle diameter of a particle having a cumulative volume of 50 volume% in the particle size distribution, and D90 is the particle diameter of a particle having a cumulative volume of 90 volume% in the particle size distribution.

The average particle diameter (D50) of the positive electrode active material precursor may be about 1.0 $\mu$m to about 6.3 $\mu$m, for example, about 1.3 $\mu$m to about 4.8 $\mu$m, about 1.6 $\mu$m to about 3.5 $\mu$m, or about 2.0 $\mu$m to about 3.0 $\mu$m. In embodiments, the D90 of the positive electrode active material precursor may be about 4.0 $\mu$m to about 10 $\mu$m, for example about 4.4 $\mu$m to about 8.5 $\mu$m, about 4.7 $\mu$m to about 7.8 $\mu$m, or about 5.0 $\mu$m to about 7.5 $\mu$m. Accordingly, the span value of the positive electrode active material precursor may be about 0.85 to about 1.48, for example, about 0.85 to about 1.38, or about 0.9 to about 1.23. For example, because the above-mentioned positive electrode active material precursor includes nickel-based oxide in the form of single particles having a uniform (e.g., substantially uniform) size, it can maintain performance by preventing or reducing formation of cracks caused by changes in the volume of particles that would otherwise occur during continuous charging/discharging.

The nickel-based oxide included in the positive electrode active material precursor may be represented by Chemical Formula 2.

The nickel-based oxide may include substantially no lithium or a small amount of lithium, and the lithium content (e.g., amount) may be less than or equal to about 0.01 mol%, for example, 0 mol% to about 0.01 mol%, or about 0.001 mol% to about 0.01 mol% based on 100 mol% of the total nickel-based oxide.

## Positive Electrode Active Material

According to some example embodiments, a positive electrode active material includes a lithium nickel-based composite oxide and is characterized by being in the form of a single particle. In embodiments, the single particle can be spherical (e.g., generally spherical), elliptical (e.g., generally elliptical), plate-shaped, irregularly shaped, or a combination of these.

The average particle diameter ($D_{50}$) of the above single particles may be about 0.5 $\mu$m to about 5 $\mu$m, for example about 0.7 $\mu$m to about 5 $\mu$m, about 0.8 $\mu$m to about 5 $\mu$m, about 1 $\mu$m to about 5 $\mu$m, or about 1.5 $\mu$m to about 4 $\mu$m. As used herein, if (e.g., when) a definition is not otherwise provided, the average particle diameter ($D_{50}$) means a diameter of particles having a cumulative volume of 50 volume% in the particle size distribution that is obtained by measuring the size (diameter or major axis length) of about 20 particles at random in a scanning electron microscope image for positive electrode active materials. If (e.g., when) the particle size of the above single particle satisfies the above ranges, the energy density of the positive electrode can be maximized or increased and the lithium ions can be helped to move smoothly, thereby achieving high capacity while improving cycle-life characteristics and rate capability of the battery.

The lithium nickel-based composite oxide of the positive electrode active material may be represented by Chemical Formula 3.

$$\text{Chemical Formula 3} \qquad Li_{a3}Ni_{x3}M5_{y3}M6_{z3}O_{2-b3}X_{b3}$$

In Chemical Formula 3, $0.9 \leq a3 \leq 1.8$, $0.3 \leq x3 \leq 1$, $0 \leq y3 \leq 0.7$, $0 \leq z3 \leq 0.7$, $0.9 \leq x3+y3+z3 \leq 1.1$, and $0 \leq b3 \leq 0.1$, M5 and M6 are each independently one or more element selected from Al, B, Ba, Ca, Ce, Co, Cr, Cu, Fe, Mg, Mn, Mo, Nb, Si, Sn, Sr, Ti, V, W, Zn, Y, and Zr, and X is one or more element selected from F, P, and S. In embodiments, M5 and M6 may be different elements. In some embodiments, M5 may be Co. In some embodiments, M6 may be Al or Mn. In some embodiments, M5 may be Co and M6 may be Al. In some embodiments, M5 may be Co and M6 may be Mn. In some embodiments, X may be absent (i.e., b3=0).

In Chemical Formula 3, x3, y3 and z3 may satisfy: $0.6 \leq x3 \leq 1$, $0 \leq y3 \leq 0.4$, and $0 \leq z3 \leq 0.4$; $0.8 \leq x3 \leq 1$, $0 \leq y3 \leq 0.2$, and $0 \leq z3 \leq 0.2$; or $0.9 \leq x3 < 1$, $0 < y3 \leq 0.1$, and $0 \leq z3 \leq 0.1$.

As an example, the positive electrode active material may be a high nickel-based positive electrode active material having a nickel content (e.g., amount) of greater than or equal to about 80 mol%, greater than or equal to about 85 mol%, greater than or equal to about 90 mol%, greater than or equal to about 91 mol%, greater than or equal to about 94 mol%, or greater than or equal to 99 mol% based on 100 mol% of a metal excluding lithium in the lithium nickel-based composite oxide. The high-nickel-based positive electrode active materials can achieve high capacity and can be applied to high-capacity, high-density rechargeable lithium batteries.

## Method for Preparing Positive Electrode Active Material

A method for preparing a positive electrode active material according to some example embodiments includes mixing a positive electrode active material precursor prepared by the method for preparing the positive electrode active material precursor with a lithium raw material and performing a second heat treatment.

A method for preparing a positive electrode active material according to some example embodiments includes mixing the positive electrode active material precursor and a lithium raw material and performing a second heat treatment.

The positive electrode active material precursor and lithium raw material may be mixed in a molar ratio of about 1:0.9 to about 1:1.8, for example, about 1:0.9 to about 1:1.5, about 1:1.03 to about 1.1, or about 1:1 to about 1:1.2.

In embodiments, the lithium source may be a compound different from the above-mentioned inactive lithium salt, and may include, for example, lithium hydroxide, lithium carbonate, a hydrate thereof, or a combination thereof.

The second heat treatment may be performed in an oxygen atmosphere and may be performed at a temperature range of, for example, about 600 °C to about 850 °C, or about 650 °C to about 800 °C, or about 680 °C to about 750 °C, and may be performed for about 2 hours to about 20 hours, or about 4 hours to about 12 hours.

**Rechargeable Lithium Battery**

In some example embodiments, a rechargeable lithium battery includes a positive electrode; a negative electrode; and an electrolyte. In embodiments, the electrolyte may be liquid electrolyte or solid electrolyte.

For example, some example embodiments may provide a rechargeable lithium battery including a positive electrode, a negative electrode, a separator between the negative electrode and the positive electrode, and an electrolyte solution. Some example embodiments provide an all-solid-state rechargeable battery including a positive electrode, a negative electrode and a solid electrolyte layer between the negative electrode and the positive electrode.

Hereinafter, a rechargeable lithium battery using an electrolyte solution will be further described as an example.

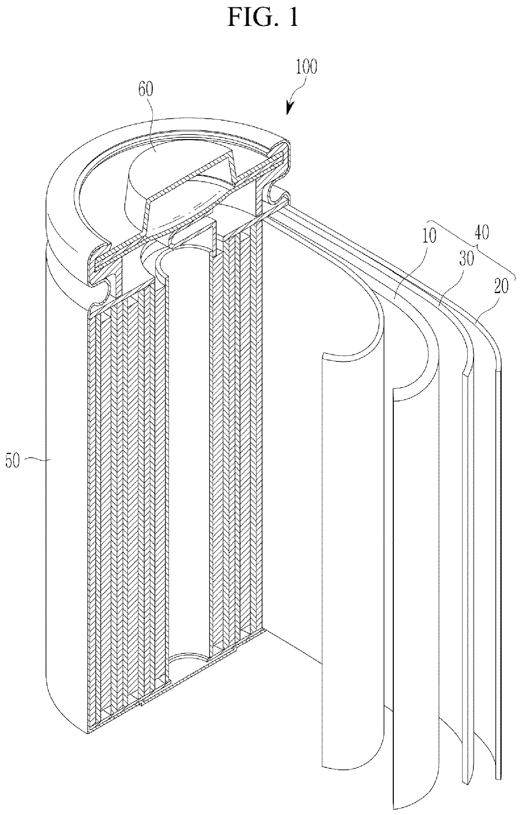

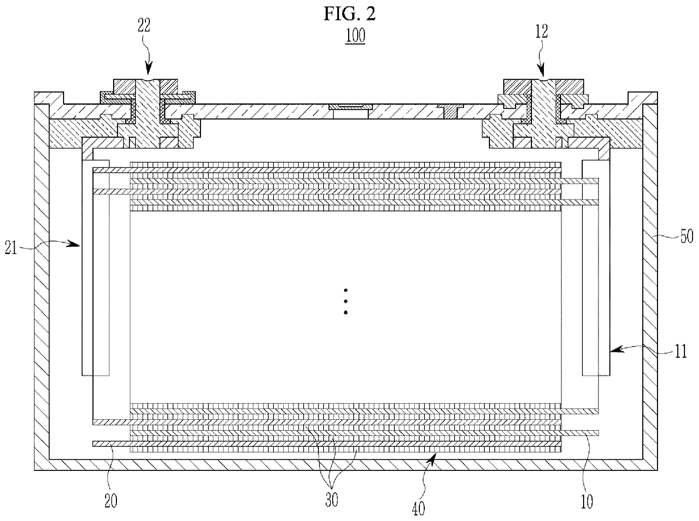

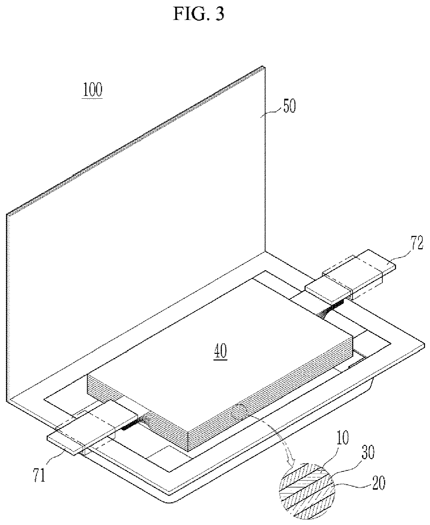

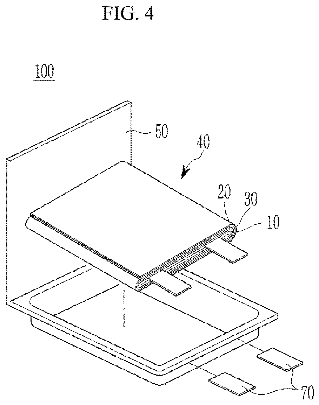

The rechargeable lithium battery may be classified into cylindrical, prismatic, pouch, coin, and/or the like depending on the shape. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 (FIG. 4), for example, a positive electrode tab 71 and a negative electrode tab 72 (FIG. 3) that serve as an electrical path to induce the current formed in the electrode assembly 40 to the outside.

**Positive Electrode**

The positive electrode is a positive electrode current collector; and a positive electrode active material layer on the positive electrode current collector. The positive electrode active material layer includes a positive electrode active material and may further include a binder and/or a conductive material (e.g., an electrically conductive material). Because the positive electrode active material has been described above, a duplicative description thereof may not be repeated here.

The binder improves binding properties of positive electrode active material particles with one another and with a current collector and examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to provide or increase electrode conductivity (e.g., electrical conductivity) and any suitable electrically conductive material may be used as a conductive material unless it causes a chemical change (e.g., an undesirable chemical change in the rechargeable lithium battery), and examples thereof may include a carbon-based material such as natural graphite, artificial graphite, carbon black, acetylene black, ketjen black, a carbon fiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

Aluminium foil may be used as the positive electrode current collector, but is not limited thereto.

**Negative Electrode**

The negative electrode includes a negative electrode current collector; and a negative electrode active material layer on the negative electrode current collector. The negative electrode active material layer includes a negative electrode active material and may further include a binder and/or a conductive material (e.g., an electrically conductive material).

**Negative Electrode Active Material**

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn (e.g., Na, K, Rb, Cs, Be, Mg, Ca, Sr, Si, Sb, Pb, In, Zn, Ba, Ge, Al, and Sn).

The material capable of doping/dedoping lithium may be a Si-based negative electrode active material and/or a Sn-based negative electrode active material. The Si-based negative electrode active material may include silicon, a silicon-carbon composite, $SiO_x$ (0<x≤2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof (e.g., Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, and a combination thereof)), or a combination thereof. The Sn-based negative electrode active material may be Sn, $SnO_2$, a Sn alloy, or a combination thereof.

The silicon-carbon composite may be a composite of silicon and amorphous carbon. An average particle diameter ($D_{50}$) of the silicon-carbon composite particles may be, for example, about 0.5 μm to about 20 μm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

If (e.g., when) the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter ($D_{50}$) of the silicon particles (primary particles) may be about 10 nm to about 1 μm, or about 10 nm to about 200 nm. The silicon particles may exist as silicon alone, in the form of a silicon alloy, and/or in an oxidized form. The oxidized form of silicon may be represented by $SiO_x$ (0<x≤2). In embodiments, the atomic content (e.g., amount) ratio of Si:O, which indicates a degree of oxidation, may be about 99:1 to about 33:67. As used herein, if (e.g., when) a definition is not otherwise provided, an average particle diameter ($D_{50}$) indicates a particle where an accumulated volume is about 50 volume% in a particle distribution.

The Si-based negative electrode active material and/or Sn-based negative electrode active material may be mixed with the carbon-based negative electrode active material. If (e.g., when) the Si-based negative electrode active material and/or Sn-based negative electrode active material and the carbon-based negative electrode active material are mixed and used, the mixing ratio may be a weight ratio of about 1:99 to about 90:10.

**Binder**

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide or increase electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, or foam.

### Electrolyte

For example, the electrolyte for a rechargeable lithium battery may be an electrolyte, which may include a non-aqueous organic solvent and a lithium salt.

The non-aqueous organic solvent serves as a medium to transmit ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether group, and/or the like; amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds), and if (e.g., when) two or more types (or kinds) are used in a mixture, a mixing ratio can be suitably or appropriately adjusted according to the suitable or desired battery performance, which should be apparent to those working in the field upon reviewing this disclosure.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethyl carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte has suitable or appropriate ionic conductivity and viscosity, and thus excellent performance can be achieved and lithium ions can move effectively.

**Separator**

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any suitable polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be provided.

The thickness of the coating layer may be about 0.5 μm to about 20 μm, for example, about 1 μm to about 10 μm, or about 1 μm to about 5 μm.

Examples and comparative examples of the present disclosure are described below. However, the following examples are only examples of the present disclosure, and the present disclosure is not limited to the following examples.

**Example 1**

**1. Preparation of Positive Electrode Active Material Precursor**

After mixing $Ni_{0.97}Co_{0.02}Mn_{0.01}(OH)_2$ and LiCl in a molar ratio of 1:2, a first heat-treatment was performed at 600 °C for 10 hours and at 900 °C for 1 hour under an oxygen atmosphere to prepare nickel-based oxide having a composition of $Ni_{0.97}Co_{0.02}Mn_{0.01}O_2$ in the form of single particles having an average particle diameter (D50) of about 2.6 μm, and after adding 10 ml of water per 0.4 g of the nickel-based oxide thereto and stirring them for 30 minutes, the nickel-based oxide was washed.

**2. Preparation of Positive Electrode Active Material**

After mixing the prepared nickel-based oxide and LiOH in a molar ratio of 1:1, a second heat-treatment was performed at 700 °C for 10 hours under the oxygen atmosphere to prepare a positive electrode active material of lithium nickel-based composite oxide having a composition of $LiNi_{0.97}Co_{0.02}Mn_{0.01}O_2$ in the form of single particles having an average particle diameter (D50) of about 3.2 $\mu$m.

### 3. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry, and the slurry was coated on an aluminium foil current collector and then, dried and compressed to manufacture a positive electrode.

The positive electrode, a lithium metal counter electrode, and an electrolyte were used to manufacture a half-cell in a common method. A polyethylene separator was used, and the electrolyte was prepared by mixing ethylene carbonate and dimethyl carbonate in a volume ratio of 3:7 and dissolving 1 M $LiPF_6$ in the mixed solvent.

### Example 2

A positive electrode active material precursor, a positive electrode active material, and a rechargeable lithium battery cell were manufactured in substantially the same manner as in Example 1 except that the first heat-treatment was performed at 600 °C for 10 hours and at 800 °C for 5 hours in the preparation of the positive electrode active material precursor.

### Example 3

A positive electrode active material precursor, a positive electrode active material, and a rechargeable lithium battery cell were manufactured in substantially the same manner as in Example 1 except that the first heat-treatment was performed at 600 °C for 10 hours and at 750 °C for 5 hours in the preparation of the positive electrode active material precursor.

### Example 4

A positive electrode active material precursor, a positive electrode active material, and a rechargeable lithium battery cell were manufactured in substantially the same manner as in Example 1 except that the positive electrode active material precursor was prepared by using $Li_2SO_4$ instead of LiCl and performing the first heat-treatment at 870 °C for 10 hours and at 900 °C for 1 hour.

### Example 5

A positive electrode active material precursor, a positive electrode active material, and a rechargeable lithium battery cell were manufactured in substantially the same manner as in Example 4 except that the first heat-treatment was performed at 870 °C for 10 hours and at 900 °C for 3 hours in the preparation of the positive electrode active material precursor.

### Example 6

A positive electrode active material precursor, a positive electrode active material, and a rechargeable lithium battery cell were manufactured in substantially the same manner as in Example 4 except that the first heat-treatment was performed at 870 °C for 10 hours and at 900 °C for 10 hours in the preparation of the positive electrode active material precursor.

### Comparative Example 1

A positive electrode active material precursor, a positive electrode active material, and a rechargeable lithium battery cell were manufactured in substantially the same manner as in Example 1 except that LiCl was not used in the preparation of the positive electrode active material precursor.

### Comparative Example 2

$Ni_{0.97}Co_{0.02}Mn_{0.01}(OH)_2$ and LiOH were mixed in a molar ratio of 1:1 and then, heat-treated at 800 °C for 10 hours under an oxygen atmosphere to prepare a positive electrode active material of lithium nickel-based composite oxide having a composition of $LiNi_{0.97}Co_{0.02}Mn_{0.01}O_2$ and an average particle diameter ($D_{50}$) of about 2.38 $\mu$m.

Subsequently, a rechargeable lithium battery cell was manufactured in substantially in the same manner as in Example 1.

**Evaluation Example 1: X-ray Diffraction (XRD) Analysis**

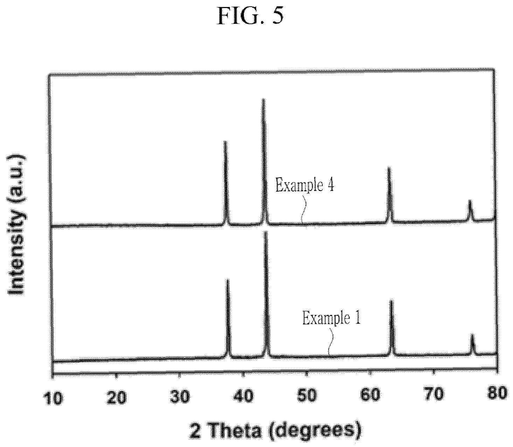

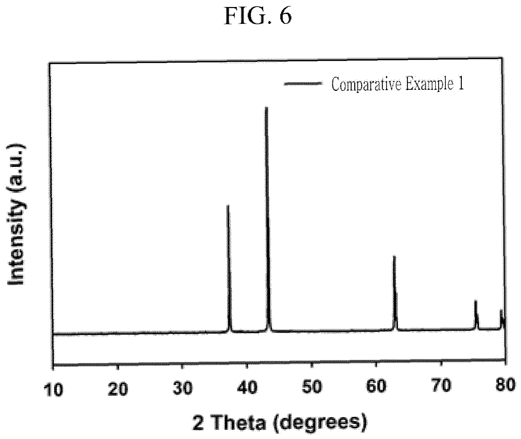

The positive electrode active material precursors of the examples and the comparative examples were subjected to an X-ray diffraction (XRD) analysis, and the results are shown in FIGS. 5 and 6. The XRD analysis was performed by using Powder XRD (D2 PHASER made by Bruker) under the following conditions.

- X-ray wavelength: 1.5406 Å (CuK$\alpha$1)
- Slit condition: Divergence Slit 0.6 mm, Scattering Slit 3 mm, Receiving Slit 0.20 mm
- Scan condition: Continuous Scan, 10 °$\leq2\theta\leq$80 °, 0.02 °/step, 1.2 °/min, total measurement time 58 min.

Referring to FIGS. 5 and 6, as a result of comparing a peak of the positive electrode active material precursor of Comparative Example 1 using no inactive lithium salt with that of the positive electrode active material precursor of Example 1 using LiCl or that of the positive electrode active material precursor of Example 4 using $Li_2SO_4$, the positive electrode active material precursor of Example 1 or 4 using the inactive lithium salt was confirmed to include no lithium in their crystal structure. Accordingly, the inactive lithium salt was confirmed to not react with the nickel-based hydroxide but contribute to growth of the single particles by inducing the nickel-based hydroxide particles into a single particle shape.

**Evaluation Example 2: Surface Analysis**

**1. Positive Electrode Active Material Precursor**

The positive electrode active material precursors according to the Examples and the Comparative Examples were compared through a scanning electron microscope (SEM).

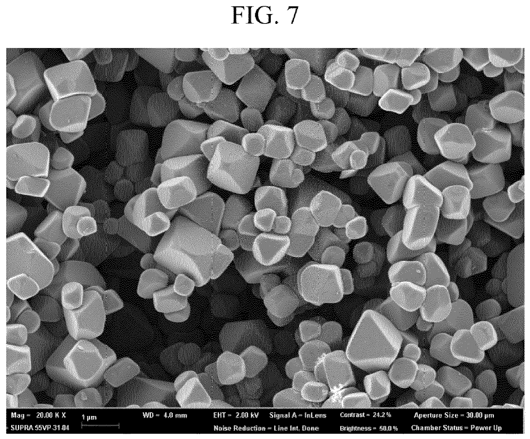

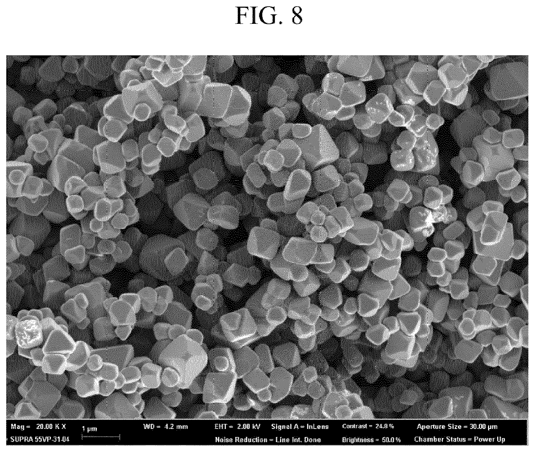

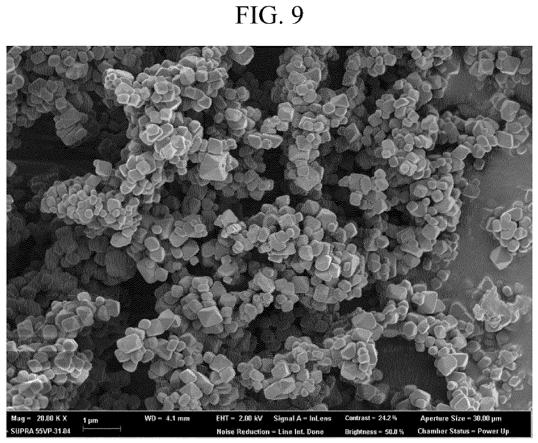

FIG. 7 is a SEM image of the surface of a positive electrode active material precursor prepared according to Example 1, FIG. 8 is a SEM image of the surface of a positive electrode active material precursor prepared according to Example 2, and FIG. 9 is a SEM image of the surface of a positive electrode active material precursor prepared according to Example 3.

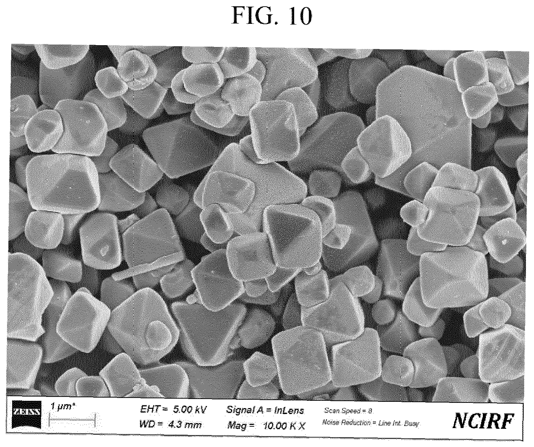

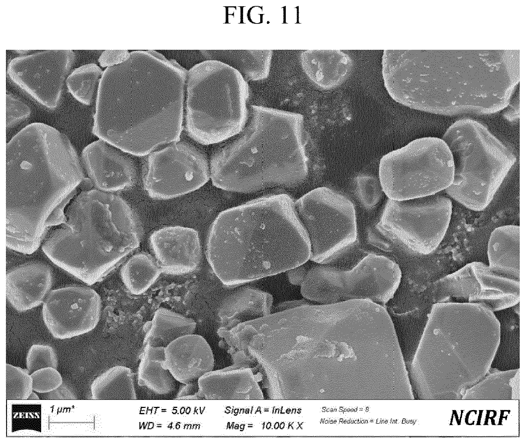

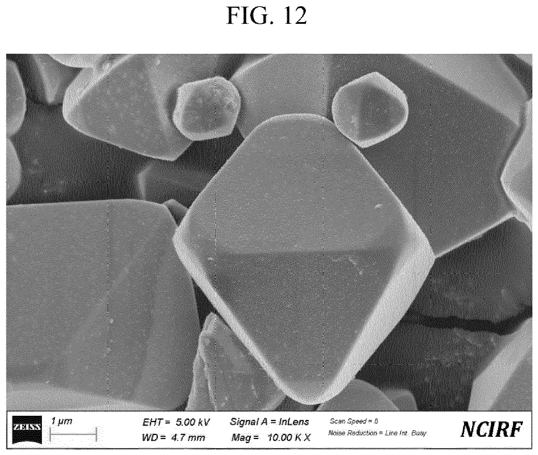

FIG. 10 is a SEM image of the surface of the positive electrode active material precursor prepared according to Example 4, FIG. 11 is a SEM image of the surface of the positive electrode active material precursor prepared according to Example 5, and FIG. 12 is a SEM image of the surface of the positive electrode active material precursor prepared according to Example 6.

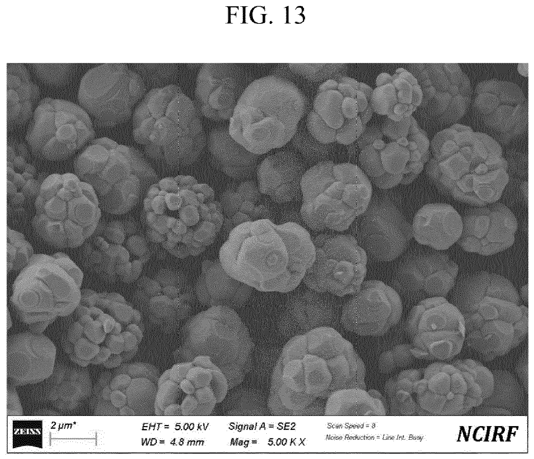

FIG. 13 is an SEM image showing the surface of the positive electrode active material precursor according to Comparative Example 1.
Referring to FIGS. 7-13, the positive electrode active material precursors according to the examples, which were prepared by mixing nickel-based hydroxide and inactive lithium salt and then, performing a heat-treatment, were conformed to be in the form of single particles, but the positive electrode active material precursor according to Comparative Example 1, in which the nickel-based hydroxide alone heat-treated without the inactive lithium salt, was confirmed to be in the form of secondary particles formed by agglomeration of the single particles having a diameter of several hundred nanometers rather than the single particles.
Referring to FIGS. 7 to 9 and FIGS. 10 to 12, the single-particle type positive electrode active material precursors in the form of single particles were controlled to have a uniform size. Accordingly, the inactive lithium salt did not react with the nickel-based hydroxide but contributed to growth of the single particles by inducing the nickel-based hydroxide particles into a single particle shape.

**2. Positive Electrode Active Material**

The positive electrode active material of the Examples and the Comparative Examples were compared through a scanning electron microscope (SEM).

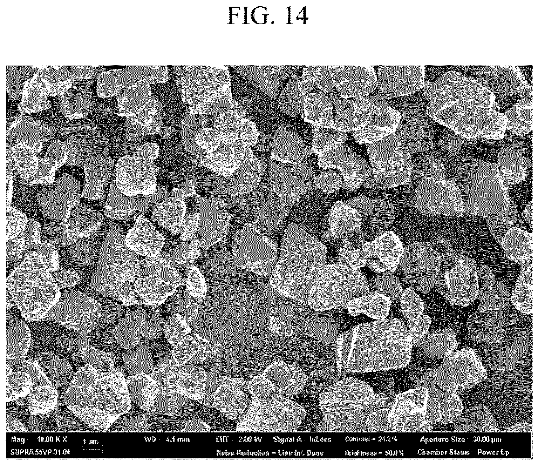

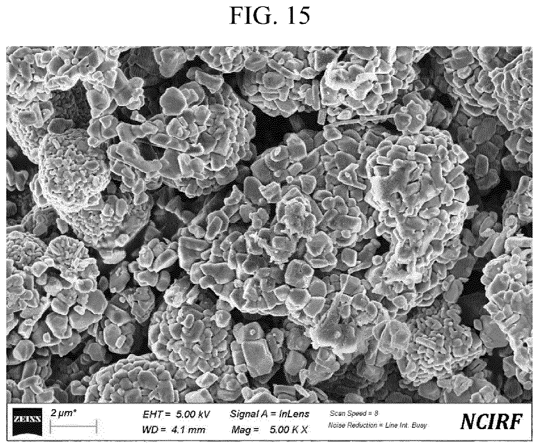

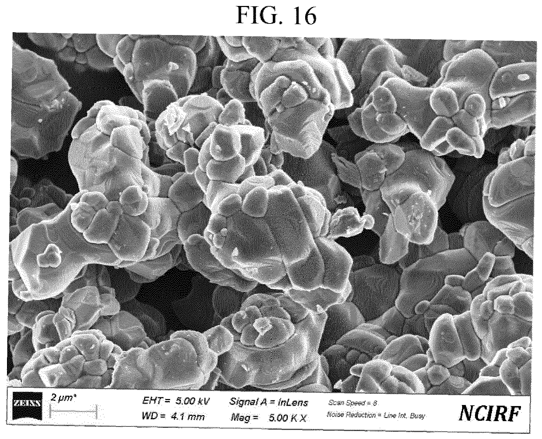

FIG. 14 is a SEM image of the surface of the positive electrode active material prepared according to Example 1, FIG. 15 is a SEM image of the surface of the positive electrode active material prepared according to Comparative Example 1, and FIG. 16 is a SEM image of the surface of the positive electrode active material prepared according to Comparative Example 2.
Referring to FIGS. 14 to 16, the positive electrode active material of Comparative Example 1, which was prepared by performing a second heat-treatment on the positive electrode active material precursor obtained through the first heat-treatment of the nickel-based hydroxide without mixing the inactive lithium salt, was confirmed that secondary particles are produced through agglomeration rather than the formation of single particles. In addition, the positive electrode active material of Comparative Example 2, which was prepared by heat-treating nickel-based hydroxide and a lithium raw material without going through a nickel-based oxide precursor, was confirmed that single particles were not successfully formed. On the contrary, the positive electrode active material precursors of the Examples, which were prepared by mixing nickel-based hydroxide and inactive lithium salt and then, firing the mixture, were confirmed to form single particles.

## Evaluation Example 3: Initial Charge/Discharge Capacity and Efficiency Evaluation

The rechargeable lithium battery cells according to the Examples and the Comparative Examples were charged to an upper limit voltage of 4.3 V at a constant current of 0.2 C and to 0.05 C at the constant voltage of 4.3 V and then, discharged to a cut-off voltage of 3.0 V at 0.2 C at 25 °C for initial charge (0.2 C charge) and discharge (0.2 C discharge). In Table 1, initial charge capacity, initial discharge capacity, and a ratio of the latter to the former as efficiency of the cells are shown.

## Evaluation Example 4: Cycle-life Characteristics

After the initial charge and discharge of Evaluation Example 3, the cells were 20 cycles repeatedly charged and discharged within a voltage range of 3.0 V to 4.3 V at 1.0 C at 45 °C to calculate a ratio of $20^{th}$ cycle discharge capacity to the initial discharge capacity, which is shown in Table 1.

Table 1

|  | 0.2 C charge (mAh/g) | 0.2 C discharge (mAh/g) | Efficiency (%) | Cycle-life (%, 25 °C, 20 cycles) |
|---|---|---|---|---|
| Example 1 | 238.8 | 208.7 | 87.4 | 94.8 |
| Example 2 | 238.3 | 207.1 | 86.9 | 92.9 |
| Example 3 | 238.6 | 206.6 | 86.6 | 93.3 |
| Example 4 | 245.2 | 215.6 | 88.3 | 95.3 |
| Example 5 | 243.5 | 213.8 | 87.8 | 94.7 |
| Example 6 | 244.8 | 214.2 | 87.5 | 93.2 |
| Comparative Example 1 | 241.3 | 203.8 | 84.2 | 89.0 |
| Comparative Example 2 | 238.7 | 201.4 | 84.5 | 89.4 |

Referring to Table 1, compared with the Comparative Examples including a positive electrode active material in the form of secondary particles, the examples including a single-particle type (or kind of) positive electrode active material were confirmed to exhibit excellent efficiency, cycle-life characteristics, and the like. In general, single particles, compared with secondary particles, have a drawback of not having high efficiency due to inferior ionic conductivity, but the Examples were confirmed to improve efficiency by realizing a very uniform particle size.

## Evaluation Example 5: Recovery Analysis of Inactive Lithium Salt

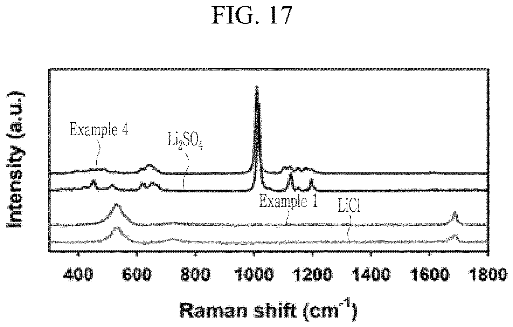

After preparing the positive electrode active material precursors of the examples, Raman spectroscopy (RAMAN) analysis was performed to determine whether or not it was possible to recover inactive lithium salt, and the results are shown in FIG. 17. The Raman analysis was performed by using DXR2xi (Thermo Scientific) under the following conditions.

- Wavelength laser: 532 nm
- Minimum Raman shift: about 50 cm$^{-1}$
- Space resolution: 500 nm
- Measurement range: 50 to 3500 cm$^{-1}$

Referring to FIG. 17, it was confirmed that the recovered inactive lithium salt after preparing the positive electrode active material precursors according to the examples had an identical peak having a reference peak of each inactive lithium salt, which confirmed that it was possible to recover the inactive lithium salt used to prepare the positive electrode active material precursor.

While the subject matter of this disclosure has been described in connection with what is presently considered to be practical example embodiments, it is to be understood that the present disclosure is not limited to the disclosed embodiments. On the contrary, it is intended to cover various suitable modifications and equivalent arrangements included within the scope of the appended claims and equivalents thereof.

**Description of Symbols**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

1. A method for preparing a single-particle type positive electrode active material precursor, comprising:

   (a) mixing a nickel-based hydroxide and an inactive lithium salt to prepare a mixture; and
   (b) performing a first heat treatment on the mixture to obtain a nickel-based oxide in a form of single particles.

2. The method as claimed in claim 1, wherein:

   the nickel-based hydroxide is represented by Chemical Formula 1:

   Chemical Formula 1 $\qquad Ni_{x1}M1_{y1}M2_{z1}(OH)_2$

   wherein, in Chemical Formula 1, $0.3 \leq x1 \leq 1$, $0 \leq y1 \leq 0.7$, $0 \leq z1 \leq 0.7$, $0.9 \leq x1+y1+z1 \leq 1.1$, M1 and M2 are each independently one or more element selected from Al, B, Ba, Ca, Ce, Co, Cr, Cu, Fe, Mg, Mn, Mo, Nb, Si, Sn, Sr, Ti, V, W, Zn, Y, and Zr, and M1 and M2 are different elements.

3. The method as claimed in claim 1 or claim 2, wherein:
   the inactive lithium salt comprises LiCl, $Li_2SO_4$, or a combination thereof.

4. The method as claimed in any one of claims 1 to 3, wherein:
   a molar ratio of the nickel-based hydroxide and the inactive lithium salt is about 0.1:1 to about 10:1.

5. The method as claimed in any one of claims 1 to 4, wherein:
   the first heat treatment is performed at a temperature of about 500 °C to about 1,000 °C for about 1 hour to about 24 hours.

6. The method as claimed in any one of claims 1 to 5, wherein:

   the nickel-based oxide is represented by Chemical Formula 2:

   Chemical Formula 2 $\qquad Ni_{x2}M3_{y2}M4_{z2}O_{2-b2}X_{b2}$

   wherein, in Chemical Formula 2, $0.3 \leq x2 \leq 1$, $0 \leq y2 \leq 0.7$, $0 \leq z2 \leq 0.7$, $0.9 \leq x2+y2+z2 \leq 1.1$, and $0 \leq b2 \leq 0.1$, M3 and M4 are each independently one or more element selected from Al, B, Ba, Ca, Ce, Co, Cr, Cu, Fe, Mg, Mn, Mo, Nb, Si, Sn, Sr, Ti, V, W, Zn, Y, and Zr, M3 and M4 are different elements, and X is one or more element selected from F, P, and S.

7. The method as claimed in any one of claims 1 to 6, wherein:

lithium content is less than or equal to about 0.01 mol% based on 100 mol% of the total nickel-based oxide.

8.  The method as claimed in any one of claims 1 to 7, wherein:
    after (b), recovering the inactive lithium salt mixed in (a) is further included.

9.  A positive electrode active material precursor, comprising:

    a nickel-based oxide in a form of single particles, and
    a span value according to Equation 1 is about 0.85 to about 1.48:

## Equation 1

$$\text{Span} = (D90-D10)/D50$$

wherein, in Equation 1, D10 is a particle diameter of a particle having a cumulative volume of 10 volume% in the particle size distribution, D50 is a particle diameter of a particle having a cumulative volume of 50 volume% in the particle size distribution, and D90 is the particle diameter of a particle having a cumulative volume of 90 volume% in the particle size distribution.

10. The positive electrode active material precursor as claimed in claim 9, wherein:
    an average particle diameter (D50) of the positive electrode active material precursor is about 1.0 $\mu$m to about 6.3 $\mu$m.

11. The positive electrode active material precursor as claimed in claim 9 or claim 10, wherein:
    lithium content is less than or equal to about 0.01 mol% based on 100 mol% of the total nickel-based oxide.

12. A method for preparing a positive electrode active material, comprising:
    mixing a positive electrode active material precursor prepared by the method for preparing the single-particle type positive electrode active material precursor as claimed in any one of claims 1 to 8 and a lithium raw material, and performing a second heat treatment.

13. A method for preparing a positive electrode active material, comprising:
    mixing the positive electrode active material precursor as claimed in any one of claims 9 to 11 and a lithium raw material, and performing a second heat treatment.

14. The method as claimed in claim 12, wherein:
    the second heat treatment is performed at a temperature range of about 600 °C to about 850 °C.

15. The method as claimed in claim 13, wherein:
    the second heat treatment is performed at a temperature range of about 600 °C to about 850 °C.

# FIG. 1

FIG. 2
100

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

| | | Europäisches Patentamt European Patent Office Office européen des brevets | **EUROPEAN SEARCH REPORT** | **Application Number** EP 25 20 3762 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIRCHEV ANGEL ET AL: "Li-ion cell safety monitoring using mechanical parameters, Part II: battery behavior during thermal abuse tests", JOURNAL OF THE ELECTROCHEMICAL SOCIETY, [Online] vol. 170, 14 January 2022 (2022-01-14), XP093369299, Pennington, NJ ISSN: 0013-4651, DOI: 10.1149/1945-7111 Retrieved from the Internet: URL:https://iopscience.iop.org/article/10.1149/1945-7111/acbc51/pdf> [retrieved on 2026-02-23] | 1-5,8, 12,14 | INV. C01G53/04 C01G53/40 C01G53/42 H01M4/525 |
| A | * experimental section * | 6,7, 9-11,13, 15 | |
| | ----- | | |
| X | WO 2024/049200 A1 (LG CHEMICAL LTD [KR]) 7 March 2024 (2024-03-07) | 9,10 | |
| A | * comparative examples; examples * | 1-8, 11-15 | TECHNICAL FIELDS SEARCHED (IPC) |
| | ----- | | C01G C01D H01M |
| X | PORTA FRANCESCA ET AL: "Synthesis and full characterisation of nickel(II) colloidal particles and their transformation into NiO", COLLOIDS AND SURFACES A : PHYSIOCHEMICAL AND ENGINEERINGS ASPECTS, vol. 155, no. 2-3, 30 July 1999 (1999-07-30), pages 395-404, XP093369536, AMSTERDAM, NL ISSN: 0927-7757, DOI: 10.1016/S0927-7757(99)00019-9 | 9,10 | |
| A | * experimental section * | 1-8, 11-15 | |
| | ----- | | |
| | -/-- | | |

The present search report has been drawn up for all claims

| Place of search | Date of completion of the search | Examiner |
|---|---|---|
| Munich | 2 March 2026 | Senftleben, Zeynep |

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 20 3762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REDDY ET AL: "Synthesis by molten salt and cathodic properties of Li(Ni"1"/"3Co"1"/"3Mn"1"/"3)O"2", JOURNAL OF POWER SOURCES, ELSEVIER, AMSTERDAM, NL, vol. 159, no. 1, 13 September 2006 (2006-09-13), pages 263-267, XP005630235, ISSN: 0378-7753, DOI: 10.1016/J.JPOWSOUR.2006.04.134 * the whole document * ----- | 1-15 | |
| A | CHEN GUOYING ET AL: "Impact of Initial Li Content on Kinetics and Stabilities of Layered Li 1+ x (Ni 0.33 Mn 0.33 Co 0.33 ) 1- x O 2", JOURNAL OF THE ELECTROCHEMICAL SOCIETY, vol. 159, no. 9, 14 August 2012 (2012-08-14), pages A1543-A1550, XP093369443, Pennington, NJ ISSN: 0013-4651, DOI: 10.1149/2.038209jes * the whole document * ----- | 1-15 | |
| A | WANG TING ET AL: "Synthesis and Manipulation of Single-Crystalline Lithium Nickel Manganese Cobalt Oxide Cathodes: A Review of Growth Mechanism", FRONTIERS IN CHEMISTRY, vol. 8, 9 September 2020 (2020-09-09), XP093369308, Switzerland ISSN: 2296-2646, DOI: 10.3389/fchem.2020.00747 * the whole document * ----- | 1-15 | TECHNICAL FIELDS SEARCHED (IPC) |

The present search report has been drawn up for all claims

| Place of search | Date of completion of the search | Examiner |
|---|---|---|
| Munich | 2 March 2026 | Senftleben, Zeynep |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 3762

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2026

| Patent document cited in search report | Publication date | Patent family member(s) | | Publication date |
|---|---|---|---|---|
| WO 2024049200 A1 | 07-03-2024 | CN | 119654715 A | 18-03-2025 |
| | | EP | 4553927 A1 | 14-05-2025 |
| | | JP | 2025527828 A | 22-08-2025 |
| | | KR | 20240032661 A | 12-03-2024 |
| | | KR | 20250008027 A | 14-01-2025 |
| | | WO | 2024049200 A1 | 07-03-2024 |

EPO FORM P0459